# EUROPÄISCHE PATENTSCHRIFT

(11) **EP 3 288 791 B1**
(45) Veröffentlichungstag und Bekanntmachung des Hinweises auf die Patenterteilung: **13.02.2019**
(21) Anmeldenummer: 16717839.1
(22) Anmeldetag: 21.04.2016
(51) Int. Cl.: B60K 35/00, B60K 37/02, B60R 11/00, G02F 1/1333, G09F 9/30, G09F 11/30

(54) **ANZEIGEVORRICHTUNG FÜR EINEN KRAFTWAGEN, VERFAHREN ZUM BETREIBEN EINER ANZEIGEVORRICHTUNG UND KRAFTWAGEN MIT EINER ANZEIGEVORRICHTUNG**
DISPLAY DEVICE FOR A MOTOR VEHICLE, METHOD FOR OPERATING A DISPLAY DEVICE, AND MOTOR VEHICLE HAVING A DISPLAY DEVICE
SYSTÈME D'AFFICHAGE POUR VÉHICULE AUTOMOBILE, PROCÉDÉ POUR FAIRE FONCTIONNER UN SYSTÈME D'AFFICHAGE ET VÉHICULE AUTOMOBILE ÉQUIPÉ D'UN SYSTÈME D'AFFICHAGE

(30) Priorität: 25.04.2015 DE 102015005365
(43) Veröffentlichungstag der Anmeldung: 07.03.2018
(73) Patentinhaber: Audi AG, 85045 Ingolstadt (DE)
(72) Erfinder: HÉLOT, Jacques, 85051 Ingolstadt (DE)
(86) Internationale Anmeldenummer: PCT/EP2016/000643
(87) Internationale Veröffentlichungsnummer: WO 2016/173699

(56) Entgegenhaltungen:
- EP-A1- 1 637 387
- DE-A1-102005 038 485
- DE-A1-102014 009 609
- FR-A1- 2 861 657

## Beschreibung

Die Erfindung betrifft eine Anzeigevorrichtung für einen Kraftwagen sowie ein Verfahren zum Betreiben einer Anzeigevorrichtung der in den Oberbegriffen der unabhängigen Patentansprüche angegebenen Art. Des Weiteren betrifft die Erfindung einen Kraftwagen mit einer derartigen Anzeigevorrichtung.

In immer mehr Kraftwagen werden in der Instrumententafel oder auch in der Mittelkonsole Displays zum Anzeigen von Informationen angeordnet. Dabei steigt die Anzahl der angezeigten Informationen. Dies führt häufig zu relativ großen Displays, insbesondere wenn grafische Benutzeroberflächen mit vielen Elementen angezeigt werden müssen. Es werden auch immer häufiger als Displays ausgebildete Kombiinstrumente verwendet, um möglichst viele und unterschiedliche Informationen für einen Fahrer anzuzeigen. In manchen Situationen kann dabei ein Kombiinstrument, insbesondere, wenn es besonders groß ausgebildet ist, den Fahrer vom Verkehrsgeschehen ablenken.

Die DE 101 15 050 A1 zeigt eine Anzeigevorrichtung für einen Kraftwagen, welcher eine flexible Anzeigeeinrichtung und eine Verstelleinrichtung aufweist, wobei die Verstelleinrichtung dazu ausgebildet ist, die Anzeigeeinrichtung von einer Verstauposition in eine Gebrauchsposition zu verstellen. Die Verstelleinrichtung umfasst dabei ein Antriebszahnrad, mittels welchem die flexible Anzeigeeinrichtung von einer in einem Aufnahmebereich angeordneten, nicht sichtbaren Verstauposition in die für einen Fahrzeuginsassen sichtbare Gebrauchsposition rolloartig ausgefahren werden kann.

Die WO 2011/062583 A1 zeigt ein rolloartig ausgebildetes, flexibles Display, welches ebenfalls von einer Verstauposition in eine Gebrauchsposition verstellt werden kann.

Die KR 20130117110 A zeigt ein gekrümmtes Display, wobei die Krümmung des Displays situationsabhängig angepasst werden kann. In Abhängigkeit von jeweiligen Positionen von Betrachtern, welche auf das Display blicken, wird die Krümmung des Displays derart angepasst, dass sämtliche Personen mit einem besonders günstigen Blickwinkel auf das Display schauen können.

Die FR 2 861 657 A1 zeigt eine Anzeigevorrichtung mit den Merkmalen der Oberbegriffe der Ansprüche 1 und 8.

Es ist die Aufgabe der vorliegenden Erfindung, eine Anzeigevorrichtung für einen Kraftwagen sowie ein Verfahren zum Betreiben einer Anzeigevorrichtung bereitzustellen, mittels welchen Inhalte besonders bedarfsgerecht für einen Fahrer eines Kraftwagens angezeigt werden können.

Diese Aufgabe wird durch eine Anzeigevorrichtung für einen Kraftwagen sowie durch ein Verfahren zum Betreiben einer Anzeigevorrichtung mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Die erfindungsgemäße Anzeigevorrichtung für einen Kraftwagen umfasst eine flexible Anzeigeeinrichtung und eine Verstelleinrichtung, welche dazu ausgebildet ist, die Anzeigeeinrichtung von einer Verstauposition in eine Gebrauchsposition zu verstellen. Die erfindungsgemäße Anzeigevorrichtung zeichnet sich dabei dadurch aus, dass die Verstelleinrichtung dazu ausgebildet ist, die Anzeigeeinrichtung von der Verstauposition in die Gebrauchsposition zu biegen, wobei die Anzeigeeinrichtung ein Kombiinstrument für einen Kraftwagen ist.

Die erfindungsgemäße Anzeigevorrichtung kann somit ein herkömmliches Kombiinstrument, welches beispielsweise als starres und unverstellbares Display ausgebildet ist, in einem Kraftwagen ersetzen. Die als Kombiinstrument ausgebildete Anzeigeeinrichtung der erfindungsgemäßen Anzeigevorrichtung kann also bei Bedarf entweder in die Verstauposition weggebogen oder in die Gebrauchsposition hochgebogen werden. In der weggebogenen Verstauposition kann der Fahrer sich besonders gut auf das Verkehrsgeschehen konzentrieren, da die flexible Anzeigeeinrichtung sich nicht mehr im Sichtfeld des Fahrers befindet. Sollte der Fahrer wiederum wünschen, sich Informationen mittels der flexiblen Anzeigeeinrichtung anzeigen zu lassen, so kann diese auf einfache Weise wieder von der Verstauposition in die Gebrauchsposition hochgebogen werden, sodass der Fahrer die für ihn relevanten Inhalte auf einfache und bequeme Weise von der als Kombiinstrument ausgebildeten Anzeigeeinrichtung ablesen kann. Beispielsweise kann es bei Nachtfahrten vorteilhaft sein, wenn mittels der Verstelleinrichtung die flexible Anzeigeeinrichtung in die heruntergebogene Verstauposition verstellt wird. Die Helligkeit der Anzeigeeinrichtung stört in der Verstauposition den Fahrer nicht mehr, sodass er die dunkle Umgebung besonders gut sehen kann. Vorzugsweise ist die Anzeigevorrichtung dabei derart ausgebildet, dass die Anzeigeeinrichtung deaktiviert wird, sobald diese in die Verstauposition verstellt worden ist. Unnötige Lichtemissionen von der Anzeigeeinrichtung werden somit in der Verstauposition verhindert, wobei auch der Stromverbrauch der Anzeigeeinrichtung dadurch reduziert werden kann.

In vorteilhafter Ausgestaltung der Erfindung ist es vorgesehen, dass die Anzeigevorrichtung eine in Fahrzeughochrichtung über der Anzeigeeinrichtung angeordnete verschwenkbare Hutze aufweist, wobei die Verstelleinrichtung dazu ausgebildet ist, die Hutze korrespondierend zu der Verstellung der Anzeigeeinrichtung zwischen einer die Anzeigeeinrichtung verdeckenden und einer die Anzeigeeinrichtung freigebenden Position auf und ab zu verstellen. Mit anderen Worten ist die Anzeigevorrichtung also derart ausgebildet, dass in bestimmungsgemäßer Einbaulage der Anzeigevorrichtung die Hutze in Fahrzeughochrichtung oberhalb von der flexiblen Anzeigeeinrichtung angeordnet ist. Die Verstellung der Hutze und der Anzeigeeinrichtung ist dabei miteinander gekoppelt. Wird die Anzeigeeinrichtung von der Verstauposition in die Gebrauchsposition bewegt, so wird die Hutze korrespondierend dazu von der die Anzeigeeinrichtung verdeckenden in die die Anzeigeeinrichtung freigebende Position verstellt. Umgekehrt wird, sobald die Anzeigeeinrichtung von der Gebrauchsposition in die Verstauposition bewegt wird, die Hutze korrespondierend dazu von der die Anzeigeeinrichtung freigebenden Position in die die Anzeigeeinrichtung verdeckende Position verschwenkt.

Vorzugsweise weist die Verstelleinrichtung einen einzigen Motor zum Verstellen der Anzeigeeinrichtung und der Hutze auf. Eine Synchronisierung der Bewegungen der Hutze und der Anzeigeeinrichtung kann somit auf besonders einfache Weise erfolgen. Alternativ ist es aber auch möglich, dass die Verstelleinrichtung beispielsweise zwei Motoren aufweist, wobei mittels des einen Motors die Anzeigeeinrichtung und mittels des anderen Motors die Hutze verstellbar ist. In diesem Fall ist die Ansteuerung der beiden Motoren derart synchronisiert, dass die Verstellung der Anzeigeeinrichtung und der Hutze immer gekoppelt erfolgt. Die Hutze bringt zum einen den Vorteil mit sich, dass der Fahrer die als Kombiinstrument ausgebildete Anzeigeeinrichtung in der Gebrauchsposition blendfrei ablesen kann. Darüber hinaus ist es mittels der verschwenkbaren Hutze möglich, die in die Verstauposition gebogene Anzeigeeinrichtung vollständig abzudecken. Die Anzeigeeinrichtung wird dadurch zum einen in der Verstauposition von äußeren Einflüssen, beispielsweise Staubbelastungen und dergleichen, geschützt. Zum anderen kann die Hutze die Anzeigeeinrichtung in der Verstauposition blickdicht abschirmen, sodass gegebenenfalls noch von der Anzeigeeinrichtung ausgestrahltes Licht nicht an das Auge des Fahrers des Kraftwagens gelangt, sodass er die Fahrzeugumgebung insbesondere durch die Windschutzscheibe besonders störungsfrei betrachten kann.

Eine weitere vorteilhafte Ausführungsform der Erfindung sieht vor, dass die Verstelleinrichtung dazu ausgebildet ist, die Hutze und die Anzeigeeinrichtung in eine teilweise aufgerichtete Position zu verstellen, wobei die Anzeigeeinrichtung dazu ausgebildet ist, in der teilweise aufgerichteten Position im Vergleich zu der Gebrauchsposition reduzierte Inhalte anzuzeigen. Die Anzeigeeinrichtung weist in der teilweise aufgerichteten Position einen flacheren Neigungswinkel als in der vollständig in die Gebrauchsposition gebogenen Stellung auf. Daher wird die Anzeigeeinrichtung in der teilweise aufgerichteten Position vorzugsweise derart angesteuert, dass mittels der Anzeigeeinrichtung angezeigte Inhalte derart gestreckt angezeigt werden, dass der Fahrer die angezeigten Inhalte genauso sehen kann, wie wenn die Anzeigeeinrichtung in der vollständig aufgerichteten, also in die Verstauposition gebogenen Position, angezeigt werden. Falls ein Fahrer sich also weniger Informationen mittels der Anzeigeeinrichtung anzeigen lassen möchte, kann die Anzeigeeinrichtung zusammen mit der Hutze in die teilweise aufgerichtete Position gebogen beziehungsweise bewegt werden, sodass der Fahrer über die Hutze hinweg einen besonders freien Blick durch die Windschutzscheibe hat und zudem noch gleichzeitig sich die reduzierten Inhalte mittels der Anzeigeeinrichtung anzeigen lassen kann.

Erfindungsgemäß ist es vorgesehen, dass die Anzeigevorrichtung ein in Fahrzeuglängsrichtung hinter der Anzeigeeinrichtung angeordnetes Display, insbesondere in bandförmiges Display, aufweist, welches dazu ausgebildet ist, zumindest einige der Informationen anzuzeigen, welche mittels der Anzeigeeinrichtung anzeigbar sind. Das vorzugsweise bandförmige Display kann beispielsweise unterhalb von einer Windschutzscheibe auf einem Armaturenträger des Kraftwagens angeordnet sein. Bei zugeklappter Hutze und somit nach unten in die Verstauposition gebogener Anzeigeeinrichtung kann der Fahrer sich also mittels des vorzugsweise bandförmigen Displays einige Inhalte, vorzugsweise reduzierte Inhalte, anzeigen lassen, welche zuvor noch mittels der Anzeigeeinrichtung angezeigt worden sind. Selbst bei in der Verstauposition heruntergebogener Anzeigeeinrichtung kann der Fahrer sich also noch für ihn relevante Inhalte anzeigen lassen, wobei der Fahrer aufgrund der heruntergeklappten Hutze und der heruntergebogenen Anzeigeeinrichtung einen besonders guten Blick durch die Windschutzscheibe hat. Alternativ oder zusätzlich kann es auch vorgesehen sein, dass die Hutze ein Display aufweist, wobei dieses Display ebenfalls dazu ausgebildet ist, zumindest einige der Informationen anzuzeigen, welche mittels der Anzeigeeinrichtung anzeigbar sind. Bei teilweise oder vollständig heruntergeklappter Hutze kann der Fahrer also einfach auf dem an der Hutze angeordneten Display noch Informationen einsehen, welche zuvor mittels der Anzeigeeinrichtung angezeigt worden sind.

Eine weitere vorteilhafte Ausführungsform der Erfindung sieht vor, dass die Anzeigevorrichtung ein Bedienelement zum manuellen Betätigen der Verstelleinrichtung aufweist. Beispielsweise kann das Bedienelement ein Knopf oder dergleichen sein, wobei durch Betätigung des Bedienelements die Anzeigevorrichtung zwischen der Verstauposition und der Gebrauchsposition hin und her gebogen werden kann. Korrespondierend dazu wird vorzugsweise dann auch die Hutze entsprechend zwischen der die Anzeigeeinrichtung verdeckenden und der die Anzeigeeinrichtung freigebenden Position hin und her bewegt. Der Fahrer kann also manuell die Verstelleinrichtung betätigen, um die Anzeigeeinrichtung in die Gebrauchsposition hochbiegen zu lassen oder in die Verstauposition herunterbiegen zu lassen.

In weiterer vorteilhafter Ausgestaltung der Erfindung ist es vorgesehen, dass die Verstelleinrichtung einen verschwenkbaren Hebelmechanismus aufweist, welcher dazu ausgebildet ist, die Anzeigeeinrichtung von der Verstauposition in die Gebrauchsposition zu biegen. Durch den verschwenkbaren Hebelmechanismus kann die Anzeigeeinrichtung besonders einfach von der Verstauposition in die Gebrauchsposition und wieder zurück gebogen werden. Vorzugsweise weist der Hebelmechanismus zumindest einen Hebel auf, welcher mit einem Endbereich in einem von der Anzeigeeinrichtung verschiedenen Bauteil der Anzeigevorrichtung verschwenkbar gelagert und mit einem gegenüberliegenden Endbereich an einer an der Anzeigeeinrichtung befestigten Linearführung gelagert ist. Dadurch kann die flexible Anzeigeeinrichtung auf besonders einfache und zuverlässige Weise zwischen der Verstauposition und der Gebrauchsposition hin und her gebogen werden. Mittels der Linearführung wird eine besonders exakte Führung des Hebels entlang der Anzeigeeinrichtung ermöglicht. Dadurch kann die Anzeigeeinrichtung besonders exakt und zuverlässig von der Verstauposition in die Gebrauchsposition und auch wieder zurück in die Verstauposition gebogen werden.

In weiterer vorteilhafter Ausgestaltung der Erfindung ist es vorgesehen, dass die Anzeigeeinrichtung eine organische Leuchtdioden aufweisende Anzeigeschicht umfasst. Bei der Anzeigeschicht handelt es sich also vorzugsweise um eine OLED-Schicht. Derartige OLED-Schichten können im aktiven Zustand wie eine Kunststofffolie gebogen werden. Allgemein kann es sich bei der Anzeigeeinrichtung also um ein OLED-Display handeln. Um die die organischen Leuchtdioden aufweisende Anzeigeschicht vor Außeneinflüssen zu schützen, kann es zudem vorgesehen sein, dass außenseitig an der Anzeigeschicht noch eine transparente Deckschicht angeordnet ist. Die transparente Deckschicht ist dabei ebenfalls flexibel ausgebildet und kann beispielsweise aus einem Plexiglas oder einem biegsamen Glas hergestellt sein. Die Deckschicht kann auch teiltransparent ausgebildet sein und eine Tönung aufweisen. Mittels der Tönung kann beispielsweise eine Haftvermittlerschicht, auch Primerschicht genannt, welche unterhalb der Deckschicht angebracht ist, optisch kaschiert werden. Vorzugsweise weist die Deckschicht zudem eine Anti-Reflexionsoberfläche beziehungsweise eine entsprechende Anti-Reflexionsbeschichtung auf. Dies trägt dazu bei, dass die Anzeigeeinrichtung auch im gebogenen Zustand besonders gut ablesbar ist.

Die Anzeigeeinrichtung kann also mehrere übereinander angeordnete Schichten, wie beispielsweise die die organischen Leuchtdioden aufweisende Anzeigeschicht und die transparente Deckschicht, aufweisen. Dabei ist vorzugsweise ausschließlich die Deckschicht in einem ersten Bereich der Anzeigeeinrichtung an einem von der Anzeigeeinrichtung verschiedenen Bauteil befestigt, wobei alle Schichten der Anzeigeeinrichtung an einem gegenüberliegend von dem ersten Endbereich angeordneten freien Endbereich der Anzeigeeinrichtung mittels einer Klemmeinrichtung miteinander verbunden sind. Eine oder mehrere unterhalb der Deckschicht angeordnete Schichten können sich also beim Aufbiegen der Anzeigeeinrichtung von der Verstauposition in die Gebrauchsposition translatorisch bezüglich der Deckschicht bewegen. Beim Aufbiegen der flexiblen Anzeigeeinrichtung werden die untereinander angeordneten Schichten nämlich unterschiedlich stark gebogen, wobei aufgrund der Relativbeweglichkeit der Schichten zueinander diese sich beim Aufbiegen der Anzeigeeinrichtung in die Gebrauchsposition relativ zueinander verschieben können. Durch diesen Freiheitsgrad können unerwünschte und gegebenenfalls schädliche Spannungen innerhalb der einzelnen Schichten vermieden werden, infolgedessen sonst gegebenenfalls wellenförmige Unebenheiten in den Schichten auftreten würden. Durch die translatorische Relativbeweglichkeit könnte es passieren, dass sich die einzelnen Schichten elektrostatisch aufladen. Infolgedessen könnte es passieren, dass sich die Schichten gegenseitig lokal anziehen, was zu einer unerwünschten Ausbildung von Beulen führen würde. Dies würde sich unter anderem negativ auf das optische Erscheinungsbild auswirken. Vorzugsweise wird deswegen an denjenigen Schichten, die sich translatorisch relativ zueinander bewegen können, eine antistatische Beschichtung angebracht.

Vorzugsweise wird unter der Anzeigeschicht eine Trägerschicht angeordnet, welche eine in Richtung der Deckschicht gerichtete Kraft auf die Anzeigeschicht ausübt und bezüglich des ersten Endes zumindest relativ beweglich zu der Deckschicht ist. Die Trägerschicht kann zum Beispiel als eine Art Federelement, beispielsweise in Form einer Blattfeder oder dergleichen, ausgebildet sein. Mittels der Trägerschicht werden also die anderen Schichten an die Deckschicht gedrückt, sodass die einzelnen Schichten durchgehend miteinander in Berührung bleiben. Mit anderen Worten wird mittels der Trägerschicht der Zusammenhalt der einzelnen Schichten der Anzeigeeinrichtung sichergestellt.

Der erfindungsgemäße Kraftwagen umfasst die erfindungsgemäße Anzeigevorrichtung oder eine vorteilhafte Ausführungsform der erfindungsgemäßen Anzeigevorrichtung.

Bei dem erfindungsgemäßen Verfahren zum Betreiben einer Anzeigevorrichtung eines Kraftwagens wird eine flexible Anzeigeeinrichtung der Anzeigevorrichtung mittels einer Verstelleinrichtung der Anzeigevorrichtung von einer Verstauposition in die Gebrauchsposition bewegt. Das erfindungsgemäße Verfahren zeichnet sich dabei dadurch aus, dass die als Kombiinstrument ausgebildete Anzeigeeinrichtung mittels der Verstelleinrichtung von der Verstauposition in die Gebrauchsposition gebogen wird. Vorteilhafte Ausgestaltungen der erfindungsgemäßen Anzeigevorrichtung sind dabei als vorteilhafte Ausgestaltungen des erfindungsgemäßen Verfahrens anzusehen, wobei die Anzeigevorrichtung insbesondere Mittel zur Durchführung der Verfahrensschritte aufweist.

In vorteilhafter Ausgestaltung des erfindungsgemäßen Verfahrens ist es vorgesehen, dass die Anzeigeeinrichtung von der Verstauposition in die Gebrauchsposition gebogen wird, sobald eine Zündung des Kraftwagens aktiviert worden ist. Mit anderen Worten wird die Anzeigeeinrichtung automatisch von der Verstauposition in die Gebrauchsposition gebogen, sobald der Zustand "Klemme 15 an" vorliegt. Vorzugsweise wird die Anzeigevorrichtung zum Anzeigen von Inhalten auch erst aktiviert, wenn die Zündung des Kraftwagens aktiviert worden ist. Die Anzeigeeinrichtung wird also bei aktivierter Anzeige automatisch von der Verstauposition in die Gebrauchsposition hochgebogen, sobald eine Zündung des Kraftwagens aktiviert worden ist.

Vorzugsweise ist es vorgesehen, dass die Anzeigeeinrichtung von der Gebrauchsposition in die Verstauposition gebogen wird, sobald eine Zündung des Kraftwagens deaktiviert worden ist. Mit anderen Worten wird die Anzeigeeinrichtung also wieder zurück in die Verstauposition gebogen, ohne dass ein Fahrzeuginsasse eine aktive Handlung an der Anzeigevorrichtung vornehmen muss. Zusätzlich kann es aber, wie bereits schon erwähnt, auch vorgesehen sein, dass die Anzeigevorrichtung ein Bedienelement zum manuellen Betätigen der Verstelleinrichtung aufweist. Durch dessen Betätigung kann ein Hochbiegen der Anzeigeeinrichtung von der Verstauposition in die Gebrauchsposition und ein Herunterbiegen von der Gebrauchsposition in die Verstauposition bewirkt werden.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht auf ein teilweise dargestelltes Cockpit eines Kraftwagens, wobei eine als Kombiinstrument ausgebildete flexible Anzeigeeinrichtung unterhalb einer aufgeschwenkten Hutze angeordnet ist;
- Fig. 2: eine Seitenschnittansicht der in die Gebrauchsposition gebogenen Anzeigeeinrichtung, wobei eine Verstelleinrichtung zum Verstellen der Anzeigeeinrichtung dargestellt ist;
- Fig. 3: eine weitere Perspektivansicht des teilweise dargestellten Cockpits, wobei die Anzeigeeinrichtung von der hochgebogenen Gebrauchsposition in die Verstauposition nach unten gebogen und durch die nach unten verschwenkte Hutze abgedeckt ist; und in
- Fig. 4: eine Seitenschnittansicht, in welcher die in die Verstauposition nach unten gebogenen Anzeigeeinrichtung sowie die nach unten verschwenkte Hutze gezeigt sind.

In den Figuren werden gleiche oder funktionsgleiche Elemente mit gleichen Bezugszeichen versehen.

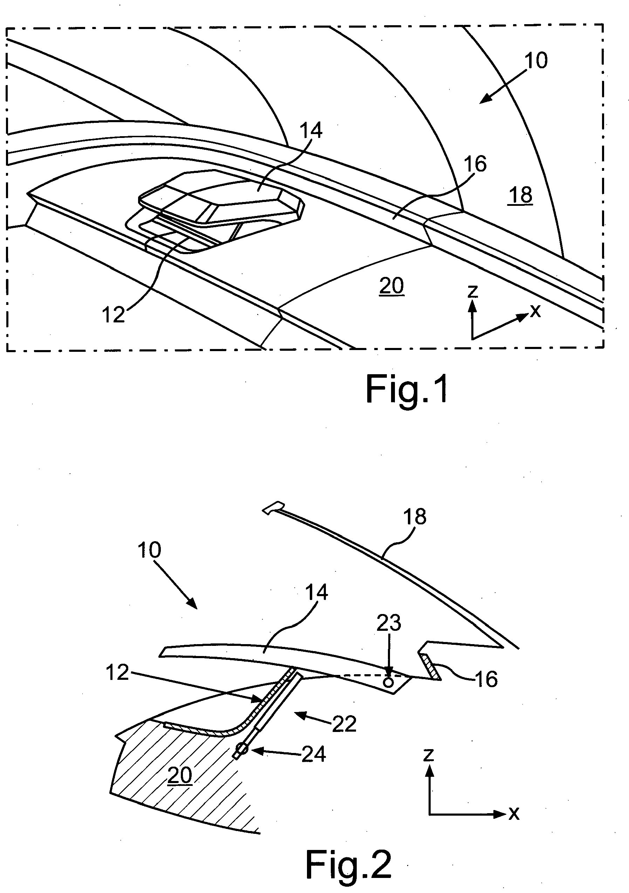

Eine insgesamt mit 10 bezeichnete Anzeigevorrichtung für einen Kraftwagen ist in einer Perspektivansicht in Fig. 1 gezeigt. Die Anzeigevorrichtung 10 umfasst eine als Kombiinstrument ausgebildete flexible Anzeigeeinrichtung 12 sowie eine in Fahrzeughochrichtung z über der flexiblen Anzeigeeinrichtung 12 angeordnete verschwenkbare Hutze 14. Die Anzeigevorrichtung 10 umfasst darüber hinaus ein bandförmiges Display 16, welches unterhalb einer Windschutzscheibe 18 auf einem Armaturenträger 20 angeordnet ist, in welchem die Anzeigeeinrichtung 12 integriert ist. Wie zu erkennen, ist das bandförmige Display 16 dabei in Fahrzeuglängsrichtung x hinter der Hutze 14 und hinter der flexiblen Anzeigeeinrichtung 12 angeordnet. Bei der als Kombiinstrument ausgebildeten Anzeigeeinrichtung 12 kann es sich beispielsweise um ein OLED-Display handeln. Mittels der Anzeigeeinrichtung 12 können vielfältige Informationen, wie beispielsweise Geschwindigkeitsinformationen, Drehzahlinformationen, Navigationshinweise und dergleichen angezeigt werden. Vorliegend ist die Anzeigeeinrichtung 12 in die Gebrauchsposition nach oben gebogen.

In Fig. 2 ist die in den Armaturenträger 20 integrierte Anzeigeeinrichtung 12 in einer Seitenschnittansicht gezeigt. Die Anzeigevorrichtung 10 umfasst eine Verstelleinrichtung 22, welche dazu ausgebildet ist, die Anzeigeeinrichtung 12 zwischen der hier gezeigten Gebrauchsposition und einer nach unten gebogenen Verstauposition hin und her zu biegen. Die Verstelleinrichtung 22 ist vorliegend als verschwenkbarer Hebelmechanismus ausgebildet, welcher um ein Gelenk 24 verschwenkt werden kann, um die flexible Anzeigeeinrichtung 12 nach oben und nach unten zu biegen. Mit anderen Worten kann die Verstelleinrichtung 22 also die flexible Anzeigeeinrichtung 12 um die hier nicht gezeigte Fahrzeugquerachse y nach oben und nach unten biegen.

Die Verstelleinrichtung 22 ist dabei dazu ausgebildet, die Hutze 14 korrespondierend zu der Verstellung der Anzeigeeinrichtung 12 zwischen einer die Anzeigeeinrichtung 12 verdeckenden und einer, wie hier dargestellt, die Anzeigeeinrichtung 12 freigebenden Position auf und ab zu verstellen. Die Hutze 14 ist dabei um ein Gelenk 23 verschwenkbar gelagert. Mit anderen Worten ist die Verstelleinrichtung 22 derart ausgebildet, dass die Bewegung der Hutze 14 und die Bewegung der Anzeigeeinrichtung 12 miteinander gekoppelt sind. Vorzugsweise weist die Verstelleinrichtung 22 dafür einen einzigen Motor zum Verstellen der Anzeigeeinrichtung 12 und der Hutze 14 auf. Die flexible Anzeigeeinrichtung 12 drückt also gerade nicht die Hutze 14 nach oben. Stattdessen wird die Hutze 14 derart mittels der Verstelleinrichtung 22 bewegt, dass von der Hutze 14 keine Kräfte auf die flexible Anzeigeeinrichtung 12 wirken. Dabei ist es auch möglich, dass die Verstelleinrichtung 22 zwei Motoren aufweist, wobei die jeweiligen Motoren jeweils dafür sorgen, die Hutze 14 und die flexible Anzeigeeinrichtung 12 miteinander gekoppelt zu bewegen.

Die Verstelleinrichtung 22 ist darüber hinaus dazu ausgebildet, die Hutze 14 und die Anzeigeeinrichtung 12 in eine teilweise aufgerichtete Position zu verstellen, wobei die Anzeigeeinrichtung 12 dazu ausgebildet ist, in der teilweise aufgerichteten Position im Vergleich zu der hier gezeigten, vollständig nach oben gebogenen Gebrauchsposition reduzierte Inhalte anzuzeigen. In der teilweise aufgerichteten Position gibt also die Hutze 14 nur einen schmaleren Bereich frei, durch welchen der Fahrer seinen Blick auf die Anzeigeeinrichtung 12 richten kann. Durch die reduzierte Darstellung von Inhalten ist es dabei trotzdem noch möglich, dass der Fahrer gewisse Inhalte von der Anzeigeeinrichtung 12 ablesen kann.

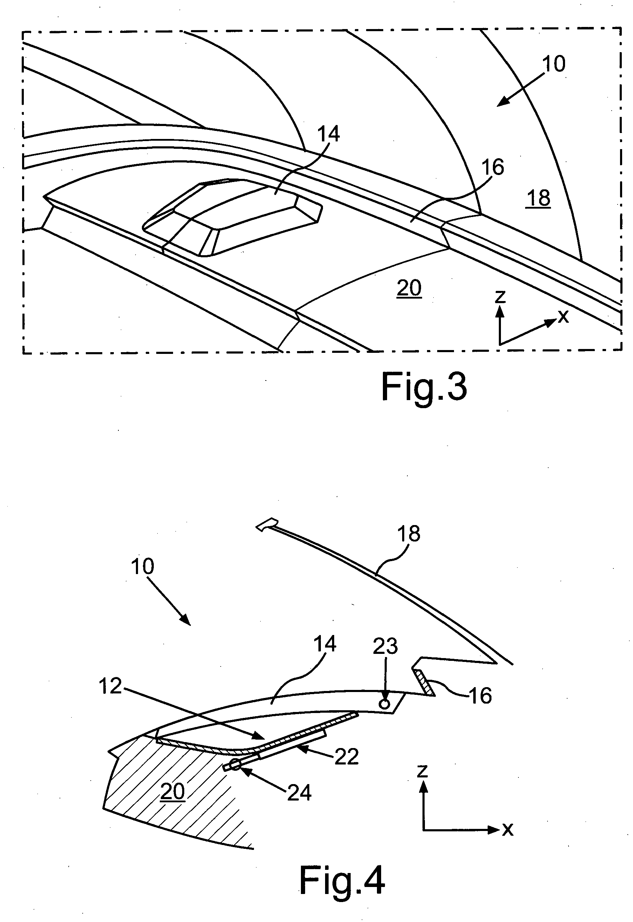

In Fig. 3 ist die Hutze in ihrer heruntergeklappten, die Anzeigeeinrichtung 12 verdeckenden Position gezeigt. Falls der Fahrer wünschen sollte, einen verbesserten Blick durch die Windschutzscheibe 18 zu haben, kann er beispielsweise ein hier nicht gezeigtes Bedienelement in Form eines Knopfs oder dergleichen betätigen, infolgedessen die Verstelleinrichtung 22 so angesteuert wird, dass die Anzeigeeinrichtung 12 in die abgesenkte Verstauposition heruntergebogen wird. Gleichzeitig bewegt die Verstelleinrichtung 22 die Hutze 14 in die hier gezeigte, die Anzeigeeinrichtung 12 verdeckende und heruntergeklappte Position.

Sobald die Anzeigeeinrichtung 12 in die abgesenkte Verstauposition gebogen worden ist und die Hutze 14 die heruntergebogene Anzeigeeinrichtung 12 verdeckt, kann es vorgesehen sein, dass die Anzeigevorrichtung 10 derart betrieben wird, dass mittels des bandförmigen Displays 16 reduzierte Inhalte angezeigt werden, welche üblicherweise sonst mittels der als Kombiinstrument dienenden Anzeigeeinrichtung 12 angezeigt werden. Beispielsweise können mittels des bandförmigen Displays 16 auch Informationen hinsichtlich der aktuellen Geschwindigkeit des Kraftwagens, vereinfachte Navigationshinweise mittels Pfeilsymbolen und dergleichen in reduzierter Form angezeigt werden. Bei heruntergeklappter Hutze 14 kann der Fahrer also ungestört durch die Windschutzscheibe 18 blicken und dabei noch für ihn relevante Informationen von dem bandförmigen Display 16 ablesen. Alternativ oder zusätzlich kann es auch vorgesehen sein, dass die Hutze 14 auf ihrer Oberseite ein hier nicht dargestelltes Display aufweist, mittels welchem zusätzlich oder alternativ Inhalte angezeigt werden können, die zuvor mittels der als Kombiinstrument dienenden Anzeigeeinrichtung 12 angezeigt worden sind. Mit anderen Worten kann die Anzeigevorrichtung 10 also bei heruntergebogener Anzeigeeinrichtung 12 und durch die Hutze 14 verdeckter Anzeigeeinrichtung 12 mittels des an der Hutze 14 angeordneten und hier nicht dargestellten Displays noch für den Fahrer relevante Informationen anzeigen.

In Fig. 4 sind die heruntergebogene Anzeigeeinrichtung 12 und die heruntergeklappte Hutze 14 in einer Seitenschnittansicht gezeigt. Wie zu erkennen, sind die flexible Anzeigeeinrichtung 12 und die Verstelleinrichtung 22 derart angeordnet und ausgebildet, dass die flexible Anzeigeeinrichtung 12 so in die hier gezeigte Verstauposition heruntergebogen werden kann, dass die Hutze 14 so weit nach unten geschwenkt werden kann, dass diese im Wesentlichen bündig mit dem Armaturenträger 20 abschließt und den Blick auf die in die Verstauposition gebogene Anzeigeeinrichtung 12 verdeckt. Je nach Bauraumsituation kann die Hutze 14 dabei auch so angeordnet und ausgebildet sein, dass diese in der heruntergeschwenkten Position vollkommen bündig in den Armaturenträger 20 integriert ist.

Vorzugsweise wird die Anzeigeeinrichtung 12 von der versenkten Verstauposition in die hochgebogene Gebrauchsposition bewegt, sobald die Zündung des Kraftwagens aktiviert worden ist. Mit anderen Worten wird die Anzeigeeinrichtung 12 also automatisch beim Aktivieren der Zündung von der versenkten Verstauposition in die nach oben gebogene Gebrauchsposition bewegt, sobald die Zündung des Kraftwagens aktiviert ist. Korrespondierend dazu wird dann auch die Hutze 14 synchron nach oben verschwenkt. Sobald die Zündung des Kraftwagens deaktiviert wird, wird die Anzeigeeinrichtung 12 wieder in die Verstauposition nach unten gebogen, wobei gekoppelt an diese Bewegung die Hutze 14 ebenfalls wieder nach unten verschwenkt wird, sodass die Anzeigeeinrichtung 12 von der Hutze 14 verdeckt wird. Allerdings kann der Fahrer, wie bereits erwähnt, auch durch eine entsprechende Betätigung eines Bedienelements ein Nachobenbiegen und ein Nachuntenbiegen der Anzeigeeinrichtung 12 bewirken, sodass er selber entscheiden kann, ob er sich entsprechende Inhalte mit der als Kombiinstrument dienenden Anzeigeeinrichtung 12 gerade anzeigen lassen möchte oder stattdessen lieber die flexible Anzeigeeinrichtung 12 in der Verstauposition versenkt haben möchte, sodass er einen ungestörten Blick durch die Windschutzscheibe 18 hat.

## Patentansprüche

1. Anzeigevorrichtung (10) für einen Kraftwagen, mit
- einer flexiblen Anzeigeeinrichtung (12), welche ein Kombiinstrument für einen Kraftwagen ist;
- einer Verstelleinrichtung (22), welche dazu ausgebildet ist, die Anzeigeeinrichtung (12) von einer Verstauposition in eine Gebrauchsposition zu verstellen;
**dadurch gekennzeichnet, dass**
die Verstelleinrichtung (22) dazu ausgebildet ist, die Anzeigeeinrichtung (12) von der Verstauposition in die Gebrauchsposition zu biegen, wobei die Anzeigevorrichtung (10) ein in Fahrzeuglängsrichtung (x) hinter der Anzeigeeinrichtung (12) angeordnetes Display (16), insbesondere ein bandförmiges Display, aufweist, welches dazu ausgebildet ist, zumindest einige der Informationen anzuzeigen, welche mittels der Anzeigeeinrichtung (12) anzeigbar sind.

2. Anzeigevorrichtung (10) nach Anspruch 1,
**dadurch gekennzeichnet, dass**
die Anzeigevorrichtung (10) eine in Fahrzeughochrichtung (z) über der Anzeigeeinrichtung (12) angeordnete verschwenkbare Hutze (14) aufweist, wobei die Verstelleinrichtung (22) dazu ausgebildet ist, die Hutze (14) korrespondierend zu der Verstellung der Anzeigeeinrichtung (12) zwischen einer die Anzeigeeinrichtung (12) verdeckenden und die Anzeigeeinrichtung (12) freigebenden Position auf und ab zu verstellen.

3. Anzeigevorrichtung (10) nach Anspruch 2,
**dadurch gekennzeichnet, dass**
die Verstelleinrichtung (22) dazu ausgebildet ist, die Hutze (14) und die Anzeigeeinrichtung (12) in eine teilweise aufgerichtete Position zu verstellen, wobei die Anzeigeeinrichtung (12) dazu ausgebildet ist, in der teilweise aufgerichteten Position im Vergleich zu der Gebrauchsposition reduzierte Inhalte anzuzeigen.

4. Anzeigevorrichtung (10) nach einem der vorhergehenden Ansprüche,
**dadurch gekennzeichnet, dass**
die Anzeigevorrichtung (10) ein Bedienelement zum manuellen Betätigen der Verstelleinrichtung (22) aufweist.

5. Anzeigevorrichtung (10) nach einem der vorhergehenden Ansprüche,
**dadurch gekennzeichnet, dass**
die Verstelleinrichtung (22) einen verschwenkbaren Hebelmechanismus aufweist, welcher dazu ausgebildet ist, die Anzeigeeinrichtung (12) von der Verstauposition in die Gebrauchsposition zu biegen.

6. Anzeigevorrichtung (10) nach einem der vorhergehenden Ansprüche,
**dadurch gekennzeichnet, dass**
die Anzeigeeinrichtung (12) eine organische Leuchtdioden aufweisende Anzeigeschicht umfasst.

7. Kraftwagen mit einer Anzeigevorrichtung (10) nach einem der vorhergehenden Ansprüche.

8. Verfahren zum Betreiben einer Anzeigevorrichtung (10) eines Kraftwagens, bei welchem eine als Kombiinstrument ausgebildete flexible Anzeigeeinrichtung (12) der Anzeigevorrichtung (10) mittels einer Verstelleinrichtung (22) der Anzeigevorrichtung (10) von einer Verstauposition in eine Gebrauchsposition bewegt wird,
**dadurch gekennzeichnet, dass**
die als Kombiinstrument ausgebildete Anzeigeeinrichtung (12) mittels der Verstelleinrichtung (22) von der Verstauposition in die Gebrauchsposition gebogen wird, wobei sobald die Anzeigeeinrichtung (12) in die abgesenkte Verstauposition gebogen worden ist und eine Hutze (14) die heruntergebogene Anzeigeeinrichtung (12) verdeckt, die Anzeigevorrichtung (10) derart betrieben wird, dass mittels eines bandförmigen Displays (16), welches in Fahrzeuglängsrichtung (x) hinter der Anzeigeeinrichtung (12) angeordnet ist, reduzierte Inhalte angezeigt werden, welche üblicherweise sonst mittels der als Kombiinstrument dienenden Anzeigeeinrichtung (12) angezeigt werden.

9. Verfahren nach Anspruch 8,
**dadurch gekennzeichnet, dass**
die Anzeigeeinrichtung (12) von der Verstauposition in die Gebrauchsposition gebogen wird, sobald eine Zündung des Kraftwagens aktiviert worden ist.

## Claims

1. Display device (10) for a motor vehicle, comprising
- a flexible display element (12) which is an instrument cluster for a motor vehicle;
- an adjustment device (22) which is configured to adjust the display element (12) from a stowed position into a position of use;
**characterised in that**
the adjustment device (22) is designed to curve up the display element (12) from the stowed position into the position of use, wherein the display device (10) comprises a display (16) arranged behind the display element (12) in the vehicle longitudinal direction (x), in particular a ribbon-like display, which is designed to display at least some of the information which can be shown by the display element (12).

2. Display device (10) according to claim 1,
**characterised in that**
the display device (10) comprises a pivotable hood (14) arranged above the display element (12) in the vehicle vertical direction (z), wherein the adjustment device (22) is designed to adjust the hood (14) corresponding to the adjustment of the display element (12) between a position covering the display element (12) and a position revealing the display element (12).

3. Display device (10) according to claim 2,
**characterised in that**
the adjustment device (22) is designed to adjust the hood (14) and the display element (12) into a partly raised position, wherein the display element (12) is designed to display reduced contents in this partly raised position compared to the position of use.

4. Display device (10) according to any of the preceding claims,
**characterised in that**
the display device (10) comprises an operating element for manually activating the adjustment device (22).

5. Display device (10) according to any of the preceding claims,
**characterised in that**
the adjustment device (22) has a pivotable lever mechanism which is configured to curve up the display element (12) from the stowed position into the position of use.

6. Display device (10) according to any of the preceding claims,
**characterised in that**
the display element (12) comprises a display layer having organic light-emitting diodes.

7. Motor vehicle with a display device (10) according to any of the preceding claims.

8. Method for operating a display device (10) of a motor vehicle, in which a flexible display element (12) of the display device (10) designed as an instrument cluster is moved by means of an adjustment device (22) of the display device (10) from a stowed position into a position of use,
**characterised in that**
the display element (12) designed as an instrument cluster is curved up by means of the adjustment device (22) from the stowed position into the position of use, wherein as soon as the display element (12) has been curved down into the lowered stowed position and a hood (14) covers the lowered down display element (12), the display device (10) is operated such that by means of a ribbon-like display (16), arranged behind the display element (12) in the vehicle longitudinal direction (x), reduced contents are displayed, which would otherwise usually be displayed by means of the display element (12) used as an instrument cluster.

9. Method according to claim 8,
**characterised in that**
the display element (12) is curved up from the stowed position into the position of use as soon as the ignition of the motor vehicle has been activated.

## Revendications

1. Appareil d'affichage (10) pour un véhicule automobile, avec
- un dispositif d'affichage (12) souple qui est un tableau de bord pour un véhicule automobile;
- un dispositif d'orientation (22) qui est conçu pour orienter le dispositif d'affichage (12) d'une position de rangement à une position d'utilisation ;
**caractérisé en ce que**
le dispositif d'orientation (22) est conçu pour plier le dispositif d'affichage (12) de la position de rangement à la position d'utilisation, dans lequel l'appareil d'affichage (10) comporte un affichage (16), en particulier un affichage sous forme de bandeau, qui est agencé derrière le dispositif d'affichage (12) dans la direction longitudinale de véhicule (x), et qui est conçu pour afficher au moins quelques-unes des informations qui peuvent être affichées au moyen du dispositif d'affichage (12).

2. Appareil d'affichage (10) selon la revendication 1,
**caractérisé en ce que**
l'appareil d'affichage (10) comporte un capot (14) pivotant, agencé au-dessus du dispositif d'affichage (12) dans la direction verticale de véhicule (z), dans lequel le dispositif d'orientation (22) est conçu pour orienter le capot (14) vers le haut et vers le bas entre une position couvrant le dispositif d'affichage (12) et une position dégageant le dispositif d'affichage (12) d'une manière correspondante à l'orientation du dispositif d'affichage (12).

3. Appareil d'affichage (10) selon la revendication 2,
**caractérisé en ce que**
le dispositif d'orientation (22) est conçu pour orienter le capot (14) et le dispositif d'affichage (12) dans une position partiellement redressée, dans lequel le dispositif d'affichage (12) est conçu pour, dans la position partiellement redressée, afficher des contenus réduits en comparaison de la position d'utilisation.

4. Appareil d'affichage (10) selon l'une quelconque des revendications précédentes,
**caractérisé en ce que**
l'appareil d'affichage (10) comporte un élément de commande destiné à actionner manuellement le dispositif d'orientation (22).

5. Appareil d'affichage (10) selon l'une quelconque des revendications précédentes,
**caractérisé en ce que**
le dispositif d'orientation (22) comporte un mécanisme de levier pivotant qui est conçu pour plier le dispositif d'affichage (12) de la position de rangement à la position d'utilisation.

6. Appareil d'affichage (10) selon l'une quelconque des revendications précédentes,
**caractérisé en ce que**
le dispositif d'affichage (12) comprend une couche d'affichage comportant des diodes électroluminescentes organiques.

7. Véhicule automobile avec un appareil d'affichage (10) selon l'une quelconque des revendications précédentes.

8. Procédé de fonctionnement d'un appareil d'affichage (10) d'un véhicule automobile, dans lequel un dispositif d'affichage (12) souple, conçu en tant que tableau de bord, de l'appareil d'affichage (10) est orienté au moyen d'un dispositif d'orientation (22) de l'appareil d'affichage (10) d'une position de rangement à une position d'utilisation,
**caractérisé en ce que**
le dispositif d'affichage (12) conçu en tant que tableau de bord est plié de la position de rangement à la position d'utilisation au moyen du dispositif d'orientation (22), dans lequel, dès que le dispositif d'affichage (12) a été plié dans la position de rangement abaissée et qu'un capot (14) couvre le dispositif d'affichage (12) plié vers le bas, l'appareil d'affichage (10) est commandé de telle sorte que, au moyen d'un affichage (16) sous forme de bandeau qui est agencé derrière, dans la direction longitudinale de véhicule (x), le dispositif d'affichage (12), des contenus réduits sont affichés, lesquels sont affichés sinon, habituellement, au moyen du dispositif d'affichage (12) servant de tableau de bord.

9. Procédé selon la revendication 8,
**caractérisé en ce que**
le dispositif d'affichage (12) est plié de la position de rangement à la position d'utilisation dès qu'un allumage du véhicule automobile a été activé.
